# EUROPEAN PATENT APPLICATION

(11) **EP 1 119 150 A2**
(43) Date of publication of application: **25.07.2001**
(21) Application number: 01201147.4
(22) Date of filing: 30.04.1998
(51) Int. Cl.: H04L 29/06, H04N 7/173, H04M 11/08

(54) **Interactive display system**

(30) Priority: 01.05.1997 GB 9708928
(62) Divisional of application: 98919351.1
(71) Applicant: Red Fig Limited, London, W1X 3RB (GB)
(72) Inventor: Ellison, Julian Goring Archdale, Oxford OX7 3EH (GB); Handley, James William, London W1N 2FT (GB)
(74) Representative: Geary, Stuart Lloyd

(57) **Abstract**

An interactive display apparatus comprises an audio subsystem (4), a control subsystem (5) and a plurality of video subsystems (2, 3). The video subsystems (2, 3) have access locally to image data, including image files and live video. The video subsystems (2, 3) are controlled by the control subsystem (5) which then sends command messages to the video subsystems (2, 3). A person watching the display (22, 42) of one of the video subsystems (2, 3) can dial into the audio subsystem (4) and thereby control the operation of the video subsystem (2, 3). To do this, the audio subsystem (4) notifies the control subsystem (5) of incoming audio command signals. It is to be noted that when the system is on line, the control subsystem (5) does not transfer image data to the video subsystem (2, 3) but merely sends commands setting the format of the images displayed on the screens (22, 42).

## Description

### Field of the Invention

The present invention relates to an interactive display system and an interactive display method.

### Background to the Invention

The display of information in public places is most commonly provided using billboards. Billboards are essentially static, although in recent years billboards have been developed which cycle by electromechanical means through two or more images. Another development is the use of large video displays which are used to display advertisements, such as are produced for television but without sound, and to display information and action replays at sporting events.

A problem with these known display apparatuses is that the sequence of images, if any, is fixed. For the purposes of advertising, it is desirable that the viewer's attention be captured and retained. However, if the viewer is merely a passive recipient of a fixed sequence of images, the viewer soon loses interest and turns away.

### Summary of the Invention

According to the present invention, there is provided an interactive display system comprising: an audio subsystem configured for receiving audio communication signals via a wide area communications network and generating control signals in dependence on the received audio communication signals; a control subsystem configured to respond to said control signals from the audio subsystem by issuing display commands, and a video subsystem including display means, configured to be responsive to said display commands to display on the display means images defined by image data, wherein the video subsystem is remote from the control subsystem and said image data is provided to the video subsystem independently of the display commands.

According to the present invention, there is also provided an interactive display method comprising the steps of:
providing a supply of images data at a remote display station;
receiving at a central station an audio communication signal via a wide area communications network and generating control signals in dependence on the received audio communication signals;
issuing from the central station a display command to the remote station in dependence on the received audio communication signal; and
displaying an image at the display station in dependence on the display command, said image including a portion defined by image data from said supply.

It will be appreciated that the use of a wide area network means that subsystems of the present invention may be located in different jurisdictions. Therefore, the applicant seeks protection for a video subsystem of a telephone-controlled interactive display system including display means, configured to be responsive to display commands from a remote control subsystem to display on the display means images defined by image data, said image data being provided to the video subsystem independently of the display commands, and means for making available to a person viewing the display means a telephone number that can be called to establish an interactive relationship between said person and the display system using a telephone.

It will be appreciated that the present invention has applications other than the provision of an enhanced "billboard".

The use of a wide area communication network, for example the Public Switched Telephone Network and public land mobile networks, means that the display system operator does not need to provide input devices at the video subsystem because a user can use a mobile telephone or a convenient payphone. The payphones at railway terminuses and airports often only have a simple hood for providing a degree of privacy. Consequently, the payphone structure in such locations is not necessarily an impediment to viewing of the display.

Other wide area networks supporting audio communication, for example the Internet, may also be used.

The audio communication signals may comprise DTMF signals or speech signals, in which case the audio subsystem will be provided with speech recognition means.

It should be noted that, while the system is "online", image data is not transmitted between the control subsystem and the video subsystem. The display commands select images for display and define the positions in which they are displayed.

As the image data is not being sent from the control subsystem in response to audio communication signals, as in viewdata systems such as Prestel, it is preferred that the video subsystem include local data storage means storing said image data for display in response to a display command. However, this is not essential and the image data may be provided from a source of real-time video signals, such as a video camera or a television tuner. The image data may also comprise program data for producing an image. The program data may be such that the image as it is displayed is altered in dependence on signals from the control subsystem. The local data storage means may comprise solid-state memory, magnetic or optical disk or magnetic tape, or indeed any combination of these.

Conveniently, the transmission of the display commands requires a bandwidth insufficient for the transmission of real-time video. Video having a frame rate greater than twenty frames per second is primarily meant by real-time video. The display commands require a bandwidth far less than could conceivably be occupied by real-time video signals using compression techniques commercially available before May 1997. Conveniently, the control subsystem can be linked to the video subsystem by a communications channel having supporting a maximum bit rate of 64kbits s⁻¹ as provided by an ISDN connection.

Preferably, the communication between the control subsystem and the video subsystem is session based rather than transaction based. Thus, in this preferred form the present invention operates in a manner quite distinct from the World Wide Web.

Having established an audio channel between a user and the audio subsystem, using for example a telephone, a resource is available for supplementing the video display with an audio capability. Preferably, therefore, the control subsystem is configured to respond to control signals from the audio subsystem by issuing audio subsystem control commands.

A problem with the use of large video displays for advertising is the lack of sound accompanyment, e.g. music or dialogue. Sound can be provided using loudspeakers. However, this is undesirable in public places. A preferred embodiment of the present invention addresses this problem. In this embodiment, the control subsystem is configured to respond to a control signal to issue both a display command for causing a moving image to be displayed by the video subsystem and an audio subsystem control command to cause the audio subsystem to make available via the wide area communications network audio signals for accompanying the moving image.

The audio capability may also be used to provide instructions to a user.

In a system having a plurality of video subsystems, the control subsystem may be implemented by separate a control process means for each video subsystem. The control process means may comprise different machines or separate software objects implemented on one machine. For large systems, a plurality of software objects may be implemented on each of a plurality of machines.

Preferably, each image configuration is controlled by means of a corresponding server. The appropriate server being used by a control process means for issuing display commands in response to control signals from the audio subsystem.

The audio subsystem may be configured to accept audio communication signals from a plurality of sources. If such a system has the audio capability referred to above, the audio subsystem is preferably configurable, under the control of the control subsystem, to send the same or different audio signals to each source.

According to the present invention, there is further provided apparatus comprising a display and processing means configured for controlling the display according to a stored program and user input commands input via a telephone network, wherein the user input commands comprise telephone dialling signals. Such apparatus may be used to enable a user to operate a menu system using their telephone. The apparatus may also be used for the playing of video games. If the apparatus is employed for games playing, it is preferred that the processing means be configured for controlling the display according to user input commands input contemporaneously from different sources via the telephone network.

According to the present invention, there is still further provided a videophone system for use with mobile telephones comprising: a first video subsystem including a display and a video camera and located in an area covered by a mobile telephone network; a second video subsystem including a display and a video camera and located in an area covered by a mobile telephone network; communication means for conveying signals from the video cameras between the video subsystems; and an audio subsystem configured for receiving first and second concurrent telephone calls from mobile telephones and providing an audio connection between said calls to enable the calling parties to converse.

According to the present invention, there is still further provided a telephony interface comprising connecting means for connection to a plurality of telephony circuits, signal processing means for producing audio signals from audio signal data and switching means configured to selectively applying audio signals produced by the signal processing means simultaneously to a plurality of telephone circuits by means of the connection means.

Preferably, the switching means is configured to selectively connect telephony circuits to each other by means of the connection means. More preferably, the switch means includes processing means operating under the control of a program or programs, the program or programs defining a set of switching states of the switching means.

In this context, "telephone circuit" means a connected telephone call having the interface acting as terminal equipment.

According to the present invention, there is provided an interactive display system comprising a display, a mobile telephone located at a position from which the display is visible, and processing means including communications means for communicating with the mobile telephone, wherein the processing means is responsive to a signal from the mobile telephone via the communications means to change an image displayed on the display.

Preferably, the processing means is responsive to a signal from the mobile telephone via the communications means to send audio signals to the mobile telephone via the communications means.

Preferably, the processing means comprises:
an audio subsystem configured for receiving audio communication signals via a wide area communications network and generating control signals in dependence on the received audio communication signals;
a control subsystem configured to respond to said control signals from the audio subsystem by issuing display commands, and
a video subsystem including said display, configured to be responsive to said display commands to display on the display images defined by image data.

More preferably, said subsystems are implemented by means of a single microcomputer.

Preferably, means is provided for dispatching data messages to the mobile telephone. This may comprise a mobile telephone connected to a microcomputer by a modem. The microcomputer being configured for sending and/or receiving messages by a mobile telephone network messaging service such as the SMS service provided by GSM networks.

### Brief Description of the Drawings

Figure 1 is a block diagram of the main components of a first system embodying the present invention;
Figure 2 is a block diagram of the audio subsystem of Figure 1;
Figure 3 is a block diagram of the telephony interface of the audio subsystem of Figure 2;
Figure 4 is a block diagram of the hardware of the control subsystem of Figure 1;
Figure 5 is a block diagram of one of the video control processors of Figure 1;
Figure 6 shows the initial display format of the first video subsystem of Figure 1;
Figure 7 shows the initial display format of the second video subsystem of Figure 1;
Figure 8 shows a display format;
Figure 9 shows another display format;
Figure 10 shows another display format;
Figure 11 is a block diagram of the main components of a second system embodying the present invention;
Figure 12 is a block diagram of the audio subsystem of Figure 12;
Figure 13 is a block diagram of the telephony interface of the audio subsystem of Figure 12;
Figure 14 is a block diagram of the hardware of the control subsystem of Figure 11;
Figure 15 is a block diagram of one of the video control processors of Figure 11;
Figure 16 shows the embodiment of Figure 11 in the software domain; and
Figure 17 shows a single microcomputer embodiment.

### Description of Preferred Embodiments

Embodiments of the present invention will now be described, by way of example, with reference to the accompanying drawings.

A first embodiment of the present invention will now be described.

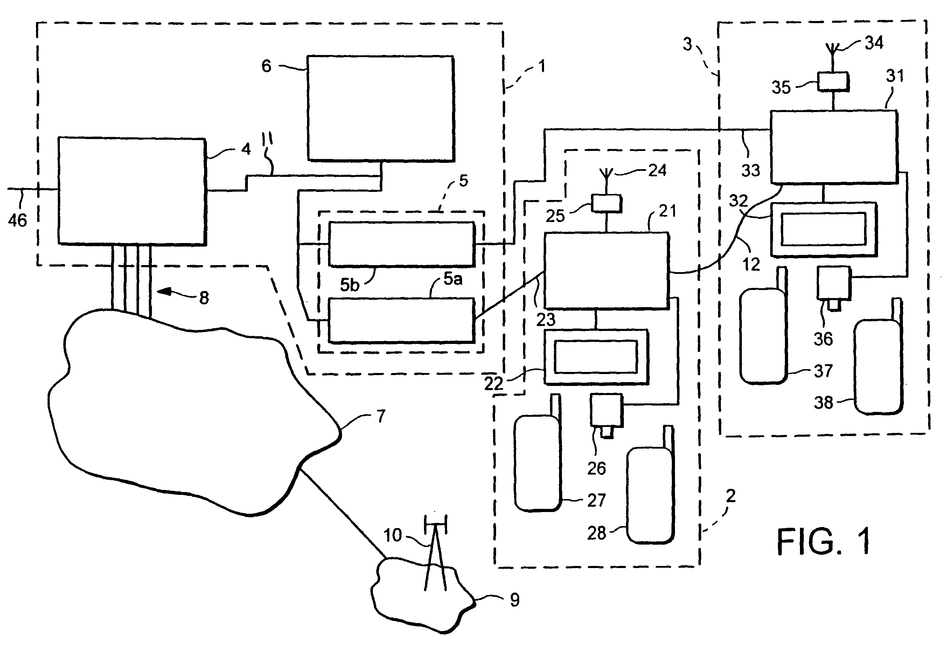

Referring to Figure 1, an interactive display system comprises a control centre 1, a first video subsystem 2 and a second video subsystem 3. The control centre 1 comprises an audio subsystem 4, a control subsystem 5 and a management subsystem 6. The control subsystem 5 comprises first and second control processors 5a, 5b.

The audio subsystem 4 is connected to the Public Switched Telephone Network 7 by four telephone lines 8 and to a direct audio feed 46. The direct audio feed 46 comprises the sound channel or channels from a broadcast television signal. The Public Switched Telephone Network 7 is linked via a gateway mobile switching centre (not shown) to a public land mobile network 9 which includes a base transmitter site 10. The audio subsystem 4, the control processors 5a, 5b and the management subsystem 6 are interconnected by local area network 11.

The first video subsystem 2 comprises a video control processor 21 and a display screen 22, such as a Sony Jumbotron (RTM), controlled by the video control processor 21. The video control processor 21 is linked to the first control processor 5a by an ISDN connection 23. An antenna 24 for receiving television signals is coupled to the video control processor 21 via a tuner 25. A video camera 26 for sensing the scene in front of the display screen 22 is also coupled to the video control processor 21.

The display screen 22 is mounted in a public place within a cell of the public land mobile network 9, covered by the base transmitter site 10. Consequently, subscribers to the public land mobile network 9 can use their mobile stations 27, 28 while watching the display screen 22.

The second video subsystem 3 is similarly arranged at another location and comprises a video control processor 31, a display screen 32, such as a Sony Jumbotron (RTM), an antenna 34, a tuner 35 and a video camera 36. The video control processor 31 is linked to the second control processor 5b by an ISDN connection 33. Similarly also, subscribers to the public land mobile network 9 can use their mobile stations 37, 38 while watching the display screen 32.

A broadband link 12 is provided between the video subsystems 2, 3. The video signals from the cameras 26, 36 of each video subsystem 2, 3 are transmitted to the other video subsystem 2, 3 in real time over the broadband link.

By calling the audio subsystem 4, subscribers to the public land mobile network 9 can use their mobile stations 27, 28, 37, 38 to control the images displayed by the display screens 22, 32 and receive accompanying audio signals. The images may comprise video presentations, advertising or informational material, games that can be played using the keys of a mobile station 27, 28, 37, 38 or live video from a camera 26, 36 for conferencing.

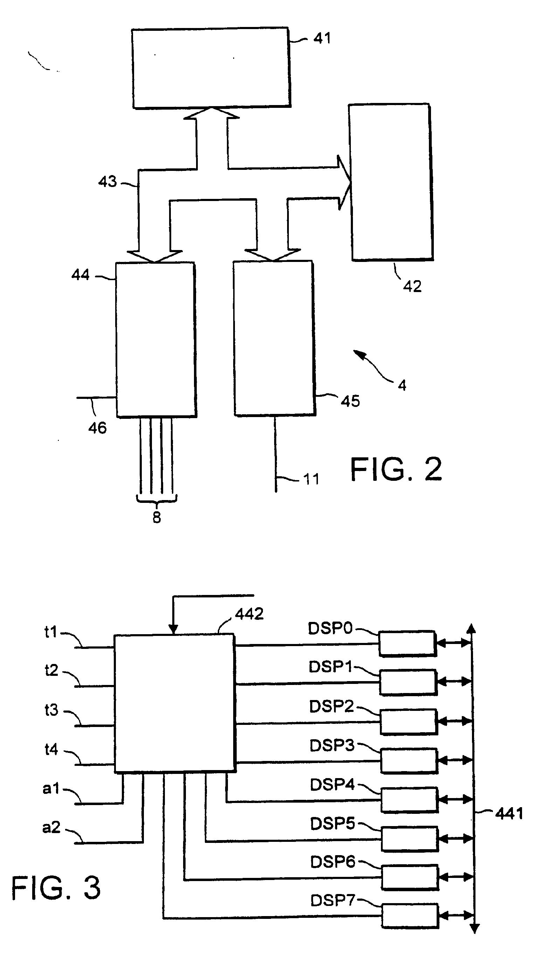

Referring to Figure 2, the audio subsystem 4 generally comprises a microcomputer having a processor 41, memory 42 and an internal data and address bus 43. A telephony interface 44 comprises a pair of 4-channel analogue telephony cards and interfaces the audio subsystem 4 to the telephone lines 8 and the direct audio feed 46. A network card 45 is provided for communication with the control subsystem and the management subsystem 6 via the local area network 11.

Referring to Figure 3, the telephony interface 44 comprises eight digital signal processors DSP0, ..., DSP7, interconnected by a bus 441 which also provides a path for the exchange of data between the telephony interface and the processor 41 of the audio subsystem 4. The telephony card 44 has six input/output connections, four of which t0, ..., t3 (corresponding to channels "0" to "3") are to the telephone lines 8 and two of which a0, a1 are to the direct audio feed 46. Switching circuitry 442 is coupled to the digital signal processors DSP0, ..., DSP7 and the input/output connections t0, ..., t3, a0, a1. The switching circuitry is controllable to connect any of the input/output connections t0, ..., t3, a0, a1 to each other and to any of the digital signal processors DSP0, ..., DSP7. These connections can be effected independently for forward and return signals.

In the present embodiment, the control software for the switching circuitry 442 is configured to effect a subset of all the possible interconnections. The interconnections that are permitted are termed "groups" hereinafter. The definitions of these groups are as follows:-
- multiplay group: any of digital signals processors DSP4, ..., DSP7 connected to one or more of input/output connections t0, ..., t3 solely for the output of signals from digital signals processors DSP4, ..., DSP7 to the telephone lines 8;
- conference group: interconnection of two or more input/output connections t0, ..., t3;
- live group: connection of input/output connections a0 or a1 to input/output connections t0, ..., t3 solely for outputting via input/output connections t0, ..., t3 signals input via input/output connections a0, a1.

For control purposes, there are considered to be four multiplay groups, "1", ..., "4" involving respectively digital signal processors DSP4, ..., DSP7, two conference groups, "5", "6" (however, there may be more or less), and two live groups "7", "8" involving input/output connections a0, al respectively.

Signals entering the interface from input/output connections t0, ..., t3 are always sent to respective ones of digital signal processors DSP0, ..., DSP3.

The function of the audio subsystem 4 is to detect events on the telephone lines 8, pass event notifying messages (NEW_CONNECT, DISCONNECT, FILE_END, MULTI_PLAY_FILE_END, DIGIT_PRESS) to the control subsystem 5 (see Figure 1) and route output audio to the correct telephone line 8 under the control of the control subsystem 5. The meaning of these messages will become apparent from description of the operation of the present embodiment hereinafter.

Since incoming signals in channels "0" to "3" are always directed to a respective one of digital signal processors DSP0, ..., DSP3, events on the telephone lines are detected by these digital signal processors DSP0, ..., DSP3. For the detection of events on the telephone lines 8, the audio subsystem 4 implements a state machine defined by program code stored in the memory 42. Each channel can be in any one of five states: IDLE, RING, ACTIVE, CONFDSP and SFP. A channel is in the IDLE state if it is not being used, for instance if the telephone line 8 associated therewith is in the on-hook state. Conversely, a channel is active if it is being used, for instance if the telephone line 8 associated therewith is in the off-hook state. The RING state occurs when a call is routed to one of the telephone lines 8 and persists until the telephony interface 44 places the line in the off-hook state. The CONFDSP state is used for channels which are not connected to telephone lines and whose digital signal processors are being used by a multiplay group. The SFP state indicates that a file playing on a channel cannot be interrupted and that some special action, such as going on-hook, may be required when the file finishes.

Each channel also has a group state. If a channel is member of a group, its group state is the number of the group of which it is a member. Group state "0" is used to indicate that a channel is not a member of any groups. When a channel is not a member of a group, it is configured so that audio may be output from its respective digital signal processor DSP0, ..., DSP3 to its respective telephone line 8.

It is desirable that the control subsystem 5 (see Figure 1) should not have to know about the actual implementation of channels and groups in the audio subsystem 4. Furthermore, as will be explained in more detail below, a plurality of control processes running in the control subsystem 5 may need concurrent access to the resources of the audio interface 44. Accordingly, the "real" channels and groups, implemented by the audio subsystem 4, are mapped by the audio subsystem 4 onto virtual channels and groups used by the control subsystem processes. The mapping is performed by means of virtual channel and group tables maintained by the audio subsystem 4.

By way of example, if a first call is received on the telephone line 8 associated with channel "1", the audio subsystem 4 associates real channel "1" with virtual channel "0" for the first control processor 5a. If, subsequently, a call is received on the telephone line 8, associated with real channel "0", the audio subsystem 4 associates the real channel "0" with virtual channel "0". When these calls are terminated, the virtual channels associated therewith again become available for mapping onto any real channel. Real channels "2" and "3" are for the second control processor 5b and are similarly mapped onto virtual channels "0" and "1" for second control processor 5b. It will be appreciated that this channel mapping can be expanded readily for mapping much larger numbers of real channels onto virtual channels for a larger number of control processors.

Conversely, if a control subsystem process commands the audio subsystem 4 to play an audio file on its virtual channel "1", the audio subsystem 4 retrieves the corresponding real channel, channel "0" in this example, from the channel table.

The mapping of each type of group is handled similarly. That is, each real group can be mapped onto the members of a predetermined subset of the virtual groups available for a control processor 5a, 5b. For instance, the first control processor 5a may have available, three virtual multiplay groups, "1" to "3", two conference groups, "4", "5", and one live play group "6".

Referring to Figure 3, the control processors 5a, 5b each comprise a microcomputer having a processor 51, memory 52 and an internal data and address bus 53. A network card 54 is provided for communication with the audio subsystem 4 (see Figure 1) and the management subsystem 6 (see Figure 1) via the local area network 11 (see Figure 1). An ISDN interface 55 is provided for communication with the respective video subsystem 2, 3 (see Figure 1).

The memory 52 stores program code for a multitasking operating system and application program code for a control process and a library of "interactive format servers". The control processes, run on respective control processors 5a, 5b, are implemented as instances of the same software object. When a control process is run, the management subsystem 6 sets its controlled video subsystem property to a unique value, in this case either the first or the second video subsystem 2, 3, and sets its initial interactive format server property.

Each member of the library of interactive format servers defines one display format for a display screen 22, 32, and includes responses to various events and identification of accompanying audio files.

When, for example, the control process is instructed to cause a display format to be used, it calls the appropriate interactive format server which returns initial format definition data. The control process transmits the format definition data to the respective video subsystem 2, 3. The interactive format server will also usually return audio command messages which are sent to the audio subsystem 4 by the control process.

The control process responds to messages from the audio subsystem 4 and the respective video subsystem 2 by passing on the messages to the interactive format server and then sending any messages returned from the interactive format server to the audio subsystem 4 or the respective video subsystem 2, 3 as necessary.

The set of control process to audio subsystem messages comprises:
- sPlay *ch filename*: start a single user file playing to channel *ch*
- sStop *ch*: stop a single user file play on channel *ch*
- conf *ch grp*: Add channel ch to conference group *grp*
- deConf *ch*: Remove channel ch from conference group *grp*
- live *ch*: Add channel *ch* to the live group
- deLive *ch*: Remove channel *ch* from live group.
- mStart *grp filename [ch* ...*]*: Start a multiplay group with the specified id, playing the file *filename* to the channels specified in the remaining args (if any). If group already exists, just start the file and add members.
- mAdd *grp ch [ch...]*: Start a multiplay group with the specified members. If group already exists just add members.
- mRemove *grp ch [ch...]*: Remove members from the specified multiplay group.
- mStop *grp*: Stop the file being played on the multiplay group.

The set of control process to video subsystem messages comprises:
- <L:G:*n1*:*n2*>: Make group n1 be in the biggest video window, and n2 in the smallest video window.
- <F:V:*g*:+:*file*>: Play the filename in group g.
- <F:V:*g*:->: Stop the video being playing in group g.
- <U:*ch*:*g*:+>: Add user ch to the group g. (represent on screen that the user is in group g.
- <U:*ch*:*g*:->: Remove user ch from group g.

The groups referred to in the control process to video subsystem messages are not those referred to in the control process to audio subsystem messages.

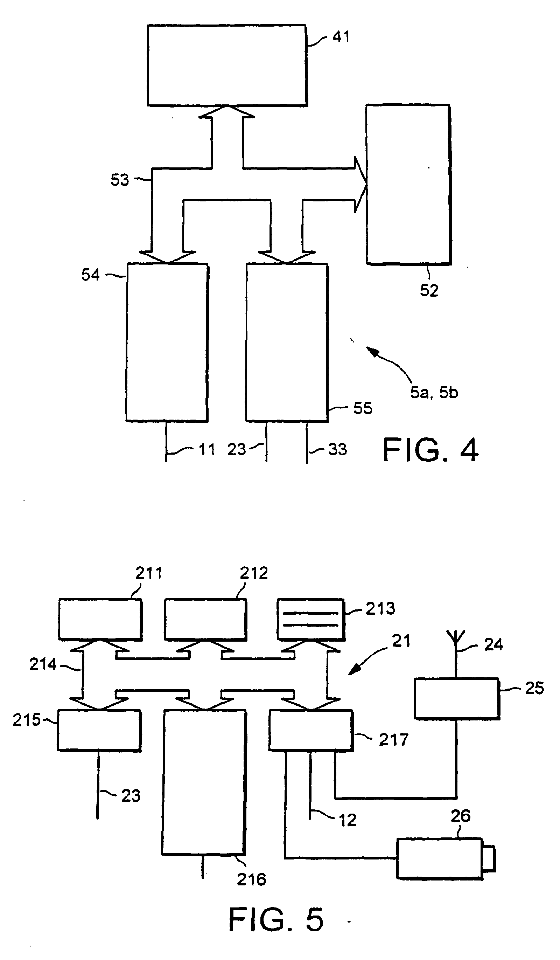

Referring to Figure 4, the video processor 21 of the first video subsystem 2 comprises a microcomputer having a processor 211, memory 212, a large capacity hard or optical disk drive 213 and an internal data and address bus 214. An ISDN card 215 is provided for communication with the first control processor 5a of the control subsystem 5 (see Figure 1). The TCP/IP protocol is used for communication between the video processor 21 and the first control processor 5a. A video card 216, including video RAM, is provided for driving the display screen 22 (see Figure 1). A multimedia I/O unit 217 is provided for receiving video signals from the camera 25 and from the antenna 24 via the tuner 25. The antenna 24 and tuner 25 could be replaced by a video tape recorder. The multimedia I/O unit 217 also enables the video from the camera 25 to be output to the broadband link 12 and video from the broadband link 12 to be received for display.

The disk drive 213 stores still and moving image files, for instance files in JPEG format or MPEG format, for use in the display. The antenna 24 and the tuner 25 are configured for receiving broadcast television programmes. The tuner 25 may include decryption means so that encrypted transmissions can be received.

When the video processor 21 receives format definition data from the first control processor 5a, it interprets the received data and sends corresponding commands to the video card 216 to construct the static elements of the display. The display may be subsequently modified with dynamic elements in response to messages from the control subsystem. It should be noted that the static elements may comprise moving images, for instance a looping video, and the dynamic elements may comprise still images which are dynamic in the sense that they can be constructed or hidden dynamically.

The video processor 21 also continually routes the video from the camera 25 to the broadbank link 12.

The management subsystem comprises a conventional microcomputer configured for use on a local area network. The microcomputer is programmed to perform management tasks such as data logging. An operator can also control the audio and control subsystems 4, 5 from the management subsystem 6. The management subsystem is also used to set the order in which display formats are used. The nature of this programming will become apparent from the following description of the operation of the present embodiment.

The operation of the present embodiment will now be described using exemplary display formats and user actions and with reference to Figures 1 to 10.

The first stage in the operation of the present embodiment is the off-line configuration of the control processors 5a, 5b, the audio subsystem 4 and the video subsystems 2, 3. Each video subsystem 2, 3 will be required to produce a number of displays. Some, if not all, of these will require still or moving image files and these files must be loaded into the disk drives 213 of the video processors 21, 31. To do this an operator uses the management subsystem 6 to instruct the control subsystems to transmit the files to the video subsystems 2, 3 from a storage device (not shown) via the ISDN links 23, 33 during system downtime. Similarly, the operator uses the management subsystem 6 to instruct the control subsystem to transfer audio files for accompanying the pages from a storage device, which may be at the management subsystem 6, to the audio subsystem 4. It is to be noted that the image files are transferred while the system is off-line. Accordingly, video files can be transmitted using a much greater time than their playing time, thereby reducing the bandwidth required for their transmission.

Once the audio and video resources have been distributed, the operator uses the management subsystem 6 to instantiate the control process for each of the video subsystems 2, 3 and set the order of the display formats for each video subsystem 2, 3. The control processes are instantiated with their video subsystem properties set to indicate the first and second video subsystems 2, 3 respectively and initial interactive format server property values corresponding to the initial display format for the respective video subsystem 2, 3.

When the control processes are instantiated, they make calls to their interactive format servers for the initial display formats of the first and second video subsystems 2, 3 respectively. The format definition data for these display formats is returned to the control processes and then dispatched to the video subsystems 2, 3.

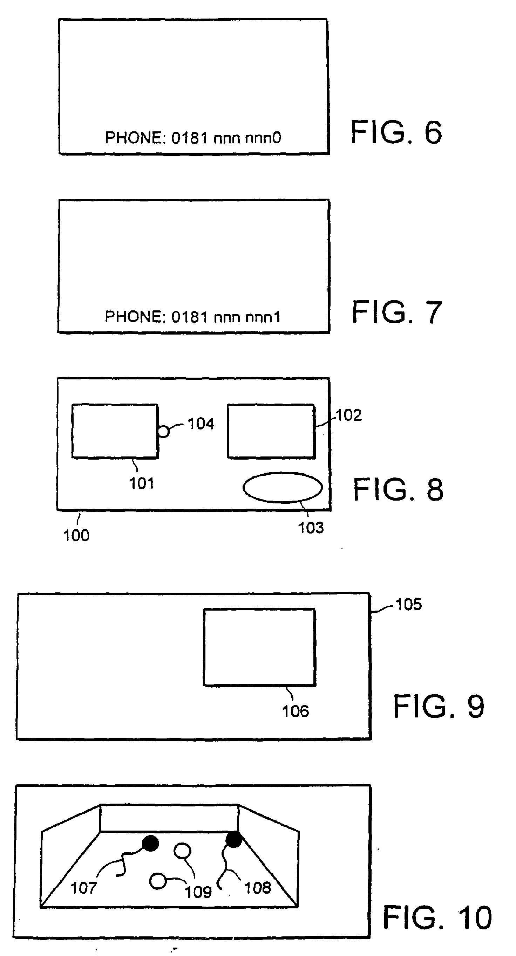

When the first video processor 21 receives the format definition data for its initial display format, its processor 211 stores it in the memory 212. The processor 211 then generates commands for the video card 216 on the basis of the format definition data. The video card 216 responds to these commands by generating the image on the display screen 22. In this case, the initial display comprises simply a field of colour with an invitation to call a telephone number, as shown in Figure 6, so it is not necessary to retrieve any background image files from the disk drive 213 or include video from the tuner 25 or the camera 25. However, the initial display could include moving or still images if the designer so wished.

The second video subsystem 3 operates in the same way as the first video subsystem 2 to produce its initial display. In the present embodiment, the initial display format of the second video subsystem 3 is the same as that of the first video subsystem save that the telephone number displayed differs (see Figure 7). The telephone numbers differ so that the audio subsystem 4 can determine which display screen 23, 33 a public land mobile network subscriber is seeing.

While the initial displays are being set up at the video subsystems 2, 3, the audio subsystem 4 is instructed to start up by the management subsystem 6. During start up, the audio subsystem 4 initialises the channels, establishes network connections to the control processors 5a, 5b.

The system is now online.

A first public land mobile network subscriber takes up the invitation to call the number displayed by the first video subsystem 2 using his mobile station 27. The call is routed through public land mobile network 9 and the Public Switched Telephone Network 7 to one of the lines 8 into the audio subsystem 4. The state of channel "0", corresponding to the line, consequently changes from IDLE to RING.

The telephony interface 44 responds to the call by generating an off-hook signal.
This places channel "0" in the ACTIVE state. When channel "0" enters the ACTIVE state, the processor 41 of the audio subsystem 4 first identifies the called number, either using direct dial in (DDI) or from the channel number, if each line 8 is reached by only one telephone number. From the called number, the processor 41 identifies the video subsystem 2, 3 from which the call was made and consequently the control processor 5a, 5b to which messages should be sent. Having identified the first control processor 5a, the processor 41 makes an entry in the channel table linking real channel "0" to the first free virtual channel associated with the first control process 56, in this case virtual channel "0". Finally, a NEW_CONNECT message is sent to the first control processor 5a by the processor 41.

The first control process receives the NEW_CONNECT message and passes the NEW_CONNECT message to the interactive format server for the first video subsystem's initial format. The interactive format server determines that the response to a NEW_CONNECT message is a jump to another display format called "Tweeny1". Accordingly, the interactive format server returns a jump command, with Tweenyl as a parameter, to the first control process 56.

On receiving the jump command, the first control process calls the interactive format server for display format "Tweeny1" which is the next display format in the schedule provided by the management subsystem 6. This returns the format definition data for "Tweeny1" which is then sent to the first video subsystem 2. The interactive format server also returns an instruction to the audio subsystem 4 requiring it to play a welcome message file to the calling subscriber. This message is sent to the audio subsystem 4 causing the telephony interface to play the welcome message's file on digital signal processor DSP0. During the playing of the welcome file, channel "0" is in the SFP state to ensure that the whole welcome message is heard by the subscriber unless he terminates the call.

The first video subsystem 2 receives the format definition data and sets up the static elements of the display as described above. "Tweeny1" is shown in Figure 8 and has a patterned background 100 defined by an image file, two video windows 101, 102 and an eliptical region 103, labelled "continue". Instructional text is also displayed and instructs the user to press "1" to hear the audio for the lefthand video window 101, "2" to hear the audio for the righthand video window 102, # to continue to the next display and ^{*} to listen to help.

Although two video windows have been defined, the video is not played immediately because of the need to sychronize the videos with their accompanying audio files. Therefore, once the first video subsystem 2 has reported back that the display format has been set up and the audio subsystem 4 has reported the end of the welcome message with a FILE_END message, the first control process calls the interactive format server and receives a message for the first video subsystem 2 to start playing a first video file in the lefthand window 101 and a message to the audio subsystem 4 to start playing the accompanying audio using virtual multiplay group "4" of the telephony interface 44. The first control process sends these messages to their respective destinations substantially simultaneously. The processor 41 of the audio subsystem 4 real multiplay group "4" and maps it onto virtual multiplay group "1" for the first control process.

Additionally under instructions from the interactive format server, the first control process sends a message to the first video subsystem 2 to start playing a second video file in the righthand window 102 and, substantially simultaneously, sends a message to the audio subsystem 4 to start playing the accompanying audio. The audio subsystem 4 allocates real multiplay group "2" for playing the accompanying audio file for the second video window 102 and maps it onto virtual multiplay group "2" for the first control process. The dispatch of a video play message and the audio play message, for the accompanying audio, may be staggered, typically by a few tens of milliseconds, to account for differing response times of the audio and video subsystems.

When the playing of an audio file accompanying a video in a window 101, 102 finishes the audio subsystem sends a MULTI_PLAY_FILE_END message to the first control process. Similarly, the first control process is informed when the playing of the video file finishes. When the first control process has received notification that the playing of both a video file and its accompanying audio file have finished, the first control process forwards the messages to the interactive format server. The interactive format server returns the audio and video file play commands which the first control process sends to the audio subsystem 4 and the first video subsystem 2. This keeps the audio synchronised with the video.

If the subscriber now presses the "1" key of his mobile station 27, the audio subsystem 4 identifies that "1" has been pressed by the subscriber on real channel "0" and sends a DIGIT_PRESS message to the first control processor 5a; the audio subsystem 4 identifies the correct destination control processor 5a, 5b from the channel in which the digit's DTMF signal was received. The DIGIT_PRESS message identifies the digit that has been pressed and the virtual channel corresponding to the real channel in which the digit's DTMF signal was received The first control process calls the interactive format server using the digit's identity as a parameter and is returned messages for the first video subsystem 2 and the audio subsystem 4 indicating that the subscriber wishes to listen to the audio for the lefthand video window. Accordingly, the first control process sends a "mAdd 0 1" message to the audio subsystem 4 to add virtual channel "0" to virtual multiplay group "1" and a <U:0:1:+> message to the first video subsystem 2. The audio subsystem 4 responds to its message by adding real channel "0" to the real multiplay group "4" after accessing the virtual channel and group mapping tables. Consequently, the subscriber then hears the audio in the loudspeaker of his mobile station 27. The first video subsystem responds to its message by generating an indicum 104, representing the subscriber, adjacent the lefthand video window 101.

If the subscriber now presses the "2" key of his mobile station 27, the above process is repeated save that the messages sent to the audio subsystem 4 and the first video subsystem 2 are "mAdd 0 2" and "<U:0:2: + > " respectively. The audio subsystem 4 responds to its message by removing real channel "0" from real multiplay group "1" and adding it to real multiplay group "2" so that the subscriber hears the audio accompanying the video in the righthand video window 102. The first video subsystem 2 responds to its message by moving the indicium 104 to a position adjacent the righthand video window 102.

If at any time the subscriber presses the "^{*}" key of his mobile station 27, the audio subsystem 4 identifies that "^{*}" has been pressed by the subscriber on real channel "0" and sends a DIGIT_PRESS message to the first control processor 5a. The DIGIT_PRESS message identifies the digit that has been pressed and the virtual channel corresponding to the real channel in which the digit's DTMF signal was received. The first control process calls the interactive format server using the digit's identity as a parameter and is returned a messages for the audio subsystem 4. The first control process responds by sending these messages to the audio subsystem to remove the real channel "0" from real multiplay group "1" or "2" (as necessary) and start the help file playing on digital signal processor DSP0 which is permanently allocated to real channel "0". The first control process 56 also sends a message to the first video subsystem 2 to remove the indicium 104 from the displayed image. When the help file has finished, the audio subsystem 4 sends a FILE_END message to the first control process 56 and resets the state of real channel "0" to ACTIVE.

If the subscriber presses the "#" key of his mobile station 26, the audio subsystem 4 identifies that "#" has been pressed by the subscriber on real channel "0" and sends a DIGIT_PRESS message to the first control processor 5a. The DIGIT_PRESS message identifies the digit that has been pressed and the virtual channel corresponding to the real channel in which the digit's DTMF signal was received.
The first control process receives the message and calls the interactive format server using the digit's identity as a parameter and is returned a "<U:0:3: + > " message for notifying the first video subsystem 2 that the subscriber is ready to move to the next page. The first control process 56 then sends the message to the first video subsystem 2 which responds by moving the indicium 104 into the eliptical window region.

After each message from the audio subsystem 4 has been processed by the first control process, the control process determines whether all of the subscribers using the first video subsystem 2 are ready to move to the next display format. In the present situation, only one subscriber is using the first video subsystem 2 and the first control process therefore immediately connects to the interactive format server for next display format, "Presentation Domain".

The operation of the low-level messaging between subsystems will now be apparent and will be largely omitted from the following in the interests of clarity.

When the interactive format server for "Presentation Domain" is connected to, the first control process sends the format definition data to the first video subsystem 2 which then constructs the new display. Referring to Figure 8, "Presentation Domain" comprises a background 105 defined by an image file, a video window 106 and instructional information. Initially, the image received by the antenna 24 and the tuner 25 is displayed in the video window 106 and audio from the direct audio feed 46 is fed to the real live group "7" in the audio subsystem 4. The direct audio feed 46 receives audio from another tuner (not shown) tuned to the same channel as the tuner 25 of the first video subsystem 2.

If the subscriber presses the "1" key on his mobile station 27, he will be connected to the real live group "6" and be fed the audio from the direct audio feed 46 and the first video subsystem 2 will display the video from the antenna 24, if it is not already doing so. If the user presses the "2" key on his mobile station 27, the first video subsystem 2 is instructed to play a video file from the disk drive 213 in the first window and the audio subsystem 4 is instructed to play the accompanying audio file on real multiplay group "1" and switch the subscriber's channel from real live group "6" to real multiplay group "1". Pressing the "^{*}" key causes an audio help file to be played to the subscriber and pressing the "#" notifies the first control process that the subscriber is ready to move on.

When the subscriber has indicated that he is ready to move on, the first control process sets up the next display format, called "Tweeny2". "Tweeny2" is identical to "Tweeny1" save for the video displayed in the video windows and the accompanying audio files.

If, while "Tweeny2" is being displayed, a second subscriber calls the audio subsystem 4 using his mobile station 28, he will be played a welcome message and may then interact with the display. The second subscriber can selectively listen to the audio for the displayed video by pressing the "1" and "2" keys on his mobile station 28. The presence of the second subscriber is indicated by a further distinctive indicium in the display image.

Once a subscriber has indicated his desire to move on by pressing the "#" key on his mobile station 27, 28, his indicium will move to the eliptical region. Until the other subscriber indicates his desire to move on or terminates his call, a subscriber who has pressed the "#" key will still be able to listen selectively to the audio for the displayed video. However, when he presses the "1" or "2" key his indicium will not move from the eliptical region.

When both subscribers have indicated a desire to move on, the first control process sets up the next display format. This display format comprises an interactive game (see Figure 9) in which each subscriber has control of a snake 107, 108 on the display screen 22 and must steer their snake to "eat" objects 109 appearing at random; the more objects a snake eats, the longer it grows. The subscribers can turn their snakes to the left or the right by pressing the "4" and "6" keys on their mobile stations 27, 28 respectively.

If the second subscriber terminates his call at this point, the audio subsystem 4 sends a DISCONNECT message to the first control process. The first control process forwards this message to the interactive format server which deletes its record of the second subscriber. The first control process also deletes its record of the disconnecting subscriber. In response to the subscriber's disconnection, the audio subsystem 4 frees the real and virtual channels allocated to the second subscriber and removes his channel from any groups of which it had been a member. The first control process also sends a message to the first video subsystem 2 causing it to delete the indicium for the second subscriber.

When the first subscriber indicates his wish to move on, the first control process sets up the next display format, called "Tweeny3". "Tweeny3" is identical to page "Tweeny1" save for the video and audio files played.

When the first subscriber indicates his wish to move on from "Tweeny3", the first control process sets up the next display format, called "Conference Domain" by connecting to the appropriate interactive format server. The "Conference Domain" format comprises two video windows which display respectively the video from the camera 26 of the first video subsystem 2 and the video from the camera 36 of the second video subsystem 3, received via the broadband link 12.

At this point, it will be assumed that a third subscriber has accessed the system from near the second video subsystem 3 using his mobile station 37 and has reached a "Conference Domain" display format on the second video subsystem 3.

The "Conference Domain" display includes a conference access code, which changes from time to time. In order to take part in a conference a subscriber must enter this code using his mobile station. When a subscriber has entered the conference access code, the relevant control process instructs the audio subsystem 4 to add the subscriber's channel to a conference group. Subscribers whose channels have been added to the same conference group can talk to other subscriber's, whose channels are members of the same group, while seeing them on their local display screen 22, 32. If a large number of subscribers are using "Conference Domains", they may be distributed amongst a plurality of conference groups to limit the number of subscribers using any one conference group.

The purpose of the conference access code is to ensure that callers using conferencing are actually near one of the video subsystems 2, 3.

When the first subscriber indicates his wish to move on, the first control process sets up the next display format, called "Tweeny4". "Tweeny4" is identical to page "Tweeny1" save for the video and audio files played.

Finally, when the first subscriber indicates his wish to move on from "Tweeny4", the first control process sets up the display format "Tweeny1" again.

If at anytime all the subscribers using one video subsystem 2, 3 terminate their calls, the relevant control process sets up that video subsystem's initial display format.

A second embodiment of the present invention will now be described.

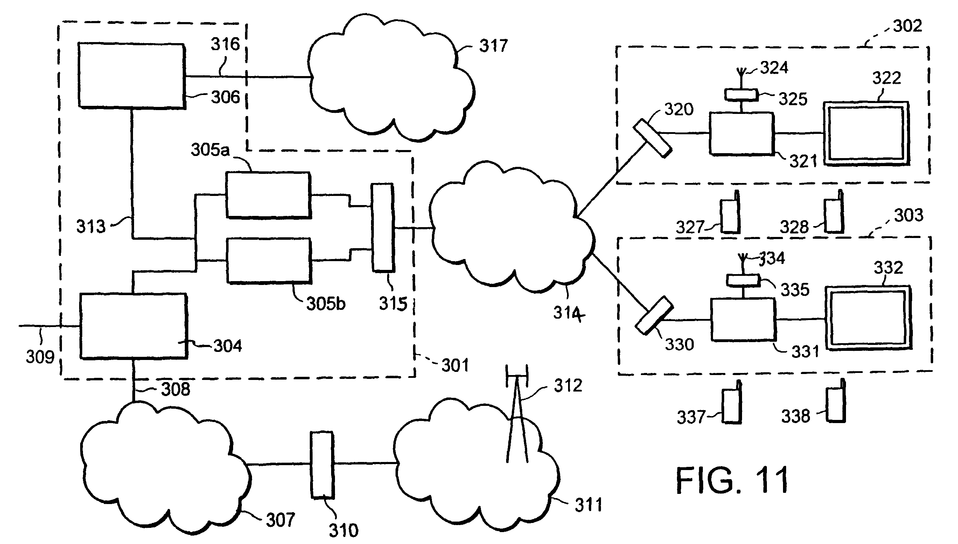

Referring to Figure 11, an interactive display system comprises a control centre 301, a first video subsystem 302 and a second video subsystem 303. The control centre 301 comprises an audio subsystem 304, two control subsystems 305a, 305b and a management subsystem 306.

The audio subsystem 304 is connected to the Public Switched Telephone Network 307 via an ISDN connection 308 and to a direct audio feed 309. The ISDN connection 308 supports 60 telephone circuits. The direct audio feed 309 comprises the sound channel or channels from a broadcast television signal. The Public Switched Telephone Network 307 is linked via a gateway mobile switching centre 310 to a public land mobile network 311 which includes a base transmitter site 312.

The control subsystems 305a, 305b are coupled to an ISDN router 313 which connects the control subsystems 305a, 305b to respective video subsystems 302, 303 via the ISDN network 314.

The management subsystem 306 has a connection 306 to the Internet.

The audio subsystem 304, the control subsystems 305a, 305b and the management subsystem 307 are interconnected by local area network 312.

The first video subsystem 302 comprises an ISDN router 320, a video control processor 321 and a display screen 322, such as a Sony Jumbotron (RTM), controlled by the video control processor 321. The video control processor 321 is linked to the ISDN network 314 by the ISDN router 320. An antenna 324 for receiving television signals is coupled to the video control processor 321 via a tuner 325.

The display screen 322 is mounted in a public place within a cell of the public land mobile network 311, covered by the base transmitter site 312. Consequently, subscribers to the public land mobile network 311 can use their mobile stations 327, 428 while watching the display screen 322.

The second video subsystem 303 is similarly arranged at another location and comprises an ISDN router 330, a video control processor 331 and a display screen 332, such as a Sony Jumbotron (RTM), controlled by the video control processor 331. The video control processor 331 is linked to the ISDN network 314 by the ISDN router 330. An antenna 334 for receiving television signals is coupled to the video control processor 331 via a tuner 335.

The second display screen 332 is mounted in a public place within a cell of the public land mobile network 311, covered by the base transmitter site 312 or another base transmitter site. Consequently, subscribers to the public land mobile network 311 can use their mobile stations 337, 338 while watching the display screen 332.

By calling the audio subsystem 304, subscribers to the public land mobile network 310 can use their mobile stations 327, 328, 337, 338 to control the images displayed by the display screens 322, 332 and receive accompanying audio signals. The images may comprise video presentations, advertising or informational material, and games that can be played using the keys of a mobile station 327, 328, 337, 338.

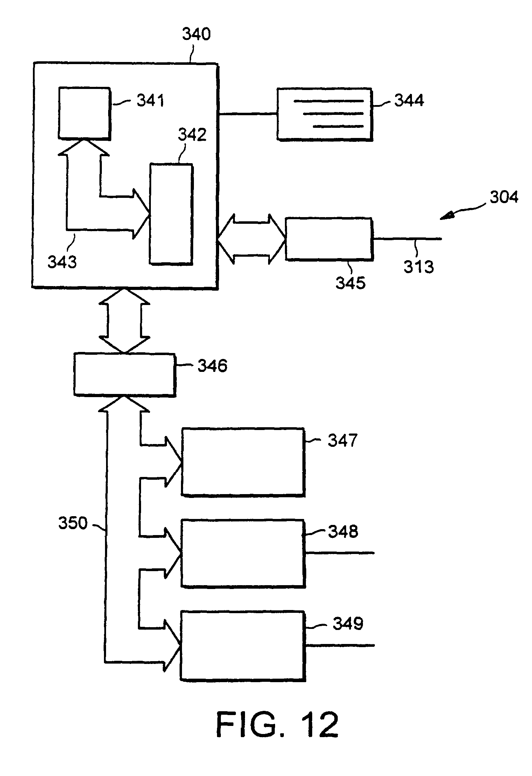

Referring to Figure 12, the audio subsystem 304 is based around a Pentium P150 microcomputer 340 having a cpu 341, memory 342 and address and data buses 343 and running under Microsoft Windows NT. The basic microcomputer 340 is augmented with hard drives 344 storing program and data files, such as audio files, a network card 345 interfacing the microcomputer 340 to the local area network 313 and an MVIP (Multi-Vendor Interface Protocol details of which can be obtained from Mitel Corporation) interface 346.

A Pika Premier voice resource card 347, an Aculab PRI rate ISDN termination card 348 and a New Voice 5-port analogue I/O card 349 are coupled to the MVIP interface 346 via an MVIP bus 350. The voice resource card 347 contains the digital signal processors required by the audio subsystem 304. The ISDN termination card 348 interfaces the audio subsystem to the ISDN connection 308. The analogue I/O card 349 provides the input for the direct audio feed 309.

The routing of audio signals between the cards 347, 348, 349 on the MVIP bus 350 is handled by the switching blocks of the cards 347, 348, 349.

The function of the audio subsystem 304 is to detect events in telephone circuits carried by the ISDN connection 308, pass event notifying messages (NEW_CONNECT, DISCONNECT, FILE_END, MULTI_PLAY_FILE_END, DIGIT_PRESS) to the control subsystem 305 (see Figure 11), make calls via telephone circuits carried by the ISDN connection 308 and route output audio to the correct telephone circuit carried by the ISDN connection 308 under the control of the control subsystem 305.

Each telephone circuit supported by the ISDN connection 308 is a discrete channel. These channels may be linked to form groups. There are two types of group, multiplay groups and conference groups. Multiplay groups comprise channels to which the same audio file is being played concurrently. Conference groups comprise channels linked such that audio input in any one member channel is output in all other member channels.

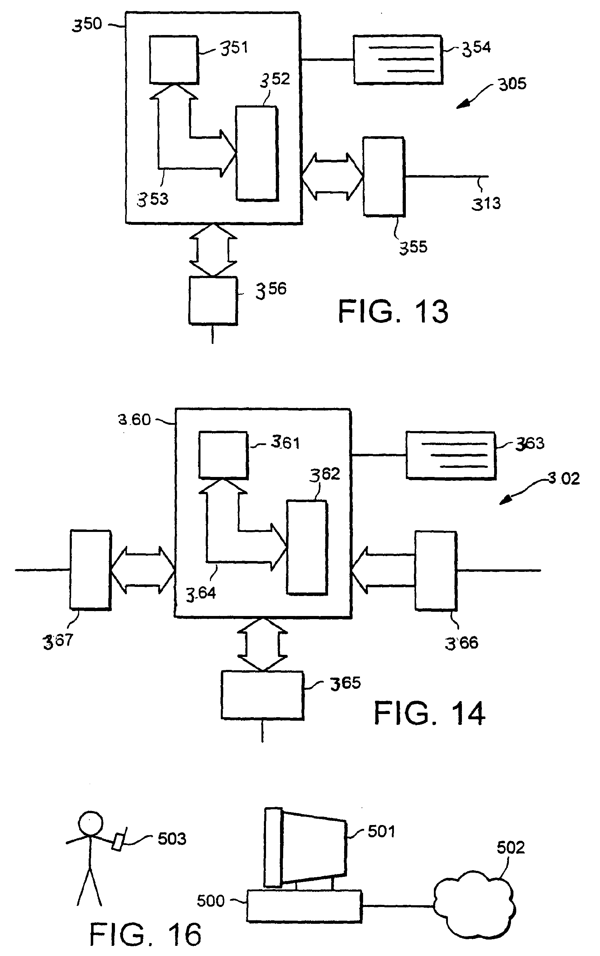

Referring to Figure 13, the control subsystem 305 is based around a Pentium P150 microcomputer 350 having a cpu 351, memory 352 and address and data buses 353 and running under Linux. The basic microcomputer 350 is augmented by a hard drives 354 storing program and data files, a network card 355 interfacing the microcomputer 340 to the local area network 312 and an ISDN card 356 coupled to the ISDN router 314 of the control subsystem 305.

Referring to Figure 14, the video processor 321 of the first video subsystem 302 comprises a microcomputer 360 having a cpu 361, memory 362, a large capacity hard or optical disk drive 363 and an internal data and address bus 364. An ISDN card 365 couples to the microcomputer 360 to the first video subsystem's ISDN router 320. The TCP/IP protocol is used for communication between the video processor 360 and the first control subsystem 305a. A video card 366, including video RAM, is provided for driving the display screen 322 (see Figure 11). A multimedia I/O unit 367 is provided for receiving video signals from the antenna 324 via the tuner 325. The antenna 324 and tuner 325 could be replaced by a video tape recorder.

The disk drive 363 stores still and moving image files, for instance files in JPEG format or MPEG format, for use in the display. The antenna 324 and the tuner 325 are configured for receiving broadcast television programmes. The tuner 325 may include decryption means so that encrypted transmissions can be received.

The management subsystem 306 comprises a conventional microcomputer configured for use on a local area network. The microcomputer is programmed to perform management tasks such as data logging. An operator can also control the audio and control subsystems 304, 305 from the management subsystem 306. The management subsystem 306 is also used to set the order in which display formats are used.

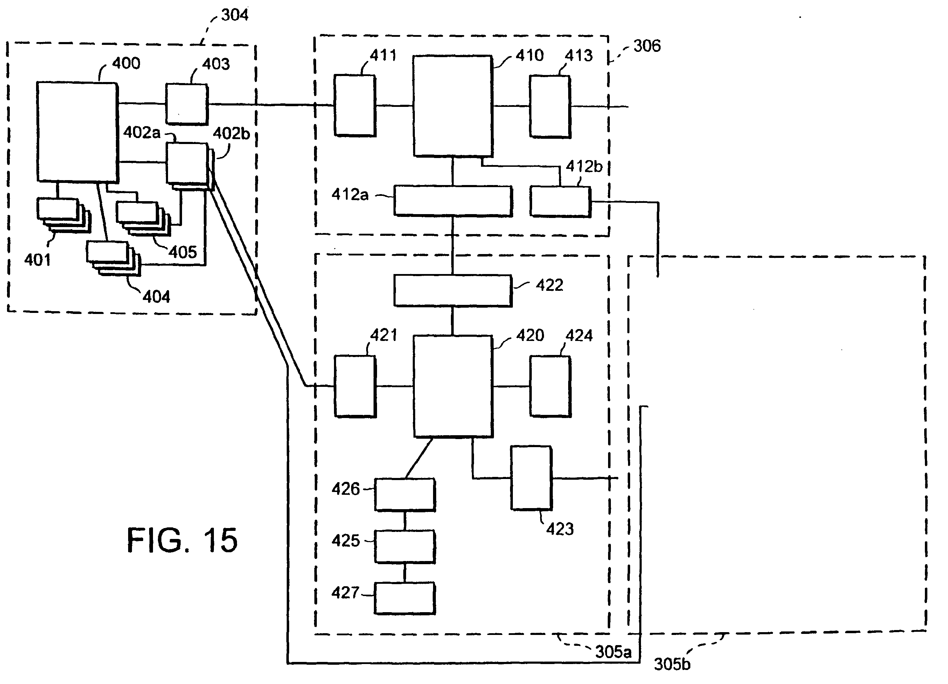

Referring to Figure 15, when the system is operating, the audio subsystem 304 comprises an instance of a server object 400, a plurality of port object instances 401, two control subsystem object instance 402a, 402b, a management subsystem object instance 403, a plurality of channel object instances 404 and a plurality of group object instances 405. The server object instance 400 is responsible for the low-level control of the cards on the MVIP bus and detecting and handling events on these cards. The port object instances 401 contain information about I/O ports, corresponding to streams on the MVIP bus. Thus, since each frame of an MVIP stream comprises 42 timeslots, each port can support 42 channels. The port object instances 401 include a record of the timeslots currently being used for channels. The control subsystem and management subsystem object instances 402a, 402b, 403 handle respectively I/O between the audio subsystem 304 and the control subsystems 305a, 305b and the management subsystem 306. The control subsystem object instances 402a, 402b is responsible for mapping real channels, i.e. timeslots on the MVIP bus, to virtual channels used by the control subsystems 305a, 305b. The channel and group object instances 404, 405 contain respectively information about channels, e.g. status and real channel id, and groups, e.g. the channels that are members.

The control subsystem object instances 402a, 402b parse messages from the control subsystem 305 and call the appropriate methods of the server object instance 400 or instances of objects within or pointed to within the server object instance 400. For messaging in the other direction, the control system object instances 402a, 402b have methods that can be called by the server object instance 400. The server object instance 400 calls methods of the first control system object instance 402a to send messages to the first control subsystem 305a and methods of the second control system object instance 402b to send messages to the second control subsystem 305b.

The management subsystem object instance 403 provides a similar function in respect of communication with the management subsystem 306. The management subsystem 306 sends messages to the audio subsystem 304, for instance linking telephone numbers to control subsystems, and receives data about events for logging.

The management subsystem 306 supports an instance of each of a server object 410, an audio subsystem object 411, two control subsystem objects 412a, 412b and a management data interface object 413 providing an Internet interface. The server object 410 is responsible for management tasks such as displaying messages moving around the system, generating log files, allowing a user to input system configuration commands, receiving commands via the Internet, reporting via the Internet and generating command files for the control subsystems 305a, 305b. The audio subsystem object instance 411, the control subsystem object instances 412a, 412b and the management data interface object instance 413 have methods that can be called by the server object instance 410 for sending messages and can themselves call methods of the server object instance 410 when messages are received.

The first control subsystem 305a supports an instance of a controller object 420, an instance of an audio subsystem object 421, an instance of a management subsystem object 422, an instance of a video subsystem object 423 for the first video subsystem 302 and an instance of a schedule object 424. The audio subsystem object instance 421, the management subsystem object instance 422 and the video subsystem object instances 423 provide I/O functions for messaging between the control subsystem 305 and respectively the audio subsystem 304, the management subsystem 306 and the first video subsystem 302. The schedule object 424 contains the order in which display formats are to be displayed at the first video subsystems 302 and definitions of time-dependent events, for example an instruction to use a particular display format at a certain time in each day. This schedule data is received from the management subsystem 306.

The first control subsystem 305a also supports an instance of an interactive format server object 425 for the first video subsystem 302. The controller object instance 420 exchanges messages with the interactive format server 425 via an interactive format server interface object 426. While an interactive format server object instance 425 is controlling a display, it obtains display definition data by calling methods an instance of a screen definition object 427. Separate screen definition objects are used for each display format and may be instantiated and destroyed as necessary.

The second control subsystem 305b supports a similar set of object instances. The major difference being that they are configured for controlling the second video subsystem 303.

The messages that are be sent between different subsystems will now be described.

### Management Subsystem to Audio Subsystem

The management subsystem 306 tells the audio subsystem 304 how many control subsystems 305 to connect to, which control subsystems 305 to connect to, and which DDI number indicates which control subsystem 305.

These messages take the form of:-
*<M;P: count[:subl;ddil[,ddi2]]>*

Where the *count* is the number of the control subsystems 305, *subl* is the name of a control subsystem 305, *ddin* are the incoming Direct-Dial-In number(s) (i.e. number that was called) associated with this control subsystem 305.

### Audio Subsystem to Management Subsystem

Messages to the master are just logged in the master log file, and hence may take any form.

### Audio Subsystem to Control Subsystem

- *<chan*:*+*[:*cli*]>: Connection on virtual channel *chan* by subscriber calling from telephone number *cli* (if available).
- <*chan*:->: Subscriber on virtual channel *chan* has disconnected.
- <*group*:&$>: File play-back on virtual group *group* has ended normally.
- <*group*:&X>: File playback failed or terminated abnormally on virtual group *group.*
- <*chan*:$>: File playback on virtual channel *chan* has ended normally.
- <*chan*:X>: File playback on virtual channel *chan* failed or terminated abnormally.
- <*chan*:*data*>: Subscriber on virtual channel *chan* has pressed a digit (0-9,^{*},#). *data* is the digit pressed.
- <*chan*:O^>: Outgoing call on virtual channel *chan* is connected.
- <*chan*:O$): Outgoing call on virtual channel *chan* has ended.
- <*chan*:OX:*e*>: Outgoing call on virtual channel *chan* has failed. e indicates the reason (1 = temporarily failure to complete call (eg number busy), 3= no answer from remote, 4 = permanent failure (eg NU)).

### Control Subsystem to Audio Subsystem

These messages arrive from interactive format server object instances with the prefix "I"
Single-channel commands (prefix "s"):
- sPlay *chan file1* [*file2*...]: Play the file(s) *filen* specified to virtual channel *chan.*
- sRecord *chan file*: Record file *file* from virtual channel *chan.*
- sStop chan: Stop all DSP activity on virtual channel *chan.*
- sLive *chan*: Play live audio on virtual channel *chan*.
- sNoLive *chan*: Stop playing live audio on virtual channel *chan.*
- sCall *chan number*: Place an outgoing call to telephone number *number* on virtual channel *chan.*
- sEndCall *chan*: End the outgoing call on virtual channel *chan.*
Conference commands (prefix "c"):
- cAdd *conf chan1* [*chan2*..]: Add the virtual channels *chan*n to virtual conference group *conf.*
- cRemove *conf chan1* [*chan2*]: Remove the virtual channels *chan*n from virtual conference group *conf*.
Multi-play group commands (prefix "m"):
- mStart *grp file* [*chan1*..]: Start file *file* on virtual group *grp* (and add virtual channels *chan*n)
- mAdd *grp chan1* [*chan2*..]: Add specified virtual channels *chan* s to virtual group *grp*
- mStop *grp*: Stop the file playing on virtual group *grp*
- mRemove *grp chan1* [*chan2*]: Remove virtual channels *chan*n from virtual group *grp*

### Management Subsystem to Control Subsystem

- < M:S:*count*:*screen1*[,*screen2*] >: Set up *count* screens, connecting to the commadelimited names *screen1*...
- *<*M:I:*idle>*: The name of the default (idle) interactive format server object instance to use (usually "ifidle")

### Control Subsystem to Management Subsystem

As with the audio subsystem 304, messages to the master are simply logged. The messages arrive from interactive format server object instances with the prefix "M". The first field states the type of the log entry. be it a telephony event 'T', a user event 'U', a domain event 'D', or a format event.

### Telephony Events

- <T:*chan*:+[:*cli*]>: A subscriber has dialled in on virtual channel *chan* from *cli.*
- <T:*chan*:->: The subscriber on virtual channel *chan* has disconnected.

### User Events

- <U:*screen*:*chan*:+>: Virtual channel *chan* has joined screen *screen.*
- <U:*screen*:*chan*:->: Virtual channel *chan* has left screen *screen.*
- <U:*screen*:*chan*:R:*file*>: Virtual channel *chan* has started to record file *file* while on *screen*
- <U:*screen*:*chan*:R$>: Recording has finished on virtual channel *chan* while on *screen.*
- <U:*screen*:*chan*:*comp*:*vote*:*cli*>: Subscriber on virtual channel *chan* has entered competition *comp* leaving *vote* as the answer (will be '7' or '8') while on *screen.*
- <U:*screen*:*chan*:GJ:*id*>: Subscriber on virtual channel *chan* has joined the game on screen *screen* and is using game id *id.*
- <U:*screen*:*chan*:GL>: Subscriber on virtual channel *chan* has left the game on screen *screen.*

### Domain Events

- <D:*screen*:+*ifs*>: Interactive format server object instance *ifs* is now controlling screen *screen* (domain enter)
- <D:*screen*:-*ifs*>: Interactive format server object instance *ifs* is no longer controlling screen *screen*.

### Format Events

- <F:*screen*:*data*>: The Interactive format server object instance controlling screen *screen* thought *data* ought to be logged.

### Control subsystem to video subsystem

The form of these messages depends on the details of the formats to be displayed and the construction of the video subsystems 302, 303. They are received from the interactive format server object instances with a "O" prefix.

### Controller object instance to interactive format server object instance

### Domain Messages

- <D:*screen*:+>: Enter the domain on screen format *screen* (i.e. start controlling the screen)
- <D:*screen*:->: Leave the domain on screen format *screen* (i.e. stop controlling the screen)

### User Messages

- <U:*screen*:*chan*:+:*count*>: Virtual channel *chan* has entered the domain on screen *screen,* and has been here *count* times before.
- <U:*screen*:*chan*:->: Virtual channel *chan* has left this domain (from scsreen *screen)*
- <U:*screen:chan:data*>: *data* has been received on vitual channel or group *chan.*

Special user messages, which arrive via the controller object instance, have their *data* field as follows:
- C:*cli*: The user defined in the rest of the message has CLI *cli.*
- I:*data*: The previous interactive format server object instance of this user specified that *data* should be sent to the new interactive format server object instance after the channel is connected. *Data* can be anything.

### Controller object instance messages

- *<*S:*screen*:-*>*: Prepare to leave the domain on screen *screen.*
- *<*S:*screen*:R:[*r*:*t*:*n*[,*n*]]>: This interactive format server object instance has been allocated r resources of the type *t*, as specified by the numbers following. The only valid resource is "G" for group. Valid types are "M" for multiplay group, and "C" for conference e.g. <S:O:R:[G:M:1,5]>
- <S:*screen*:F:*data*>: Screen *screen* has been sent the format message *data.*
- <S:*screen*:@:*data*>: A schedule return.
- <S:*screen*:S:*data*>: A 'snapshot' message from the schedule.
- <S:*screen*:U:*data*>: A special user message.

### Output Messages

- <S:*screen*:*data>*: The output machine *screen* has sent *data* back to it's interactive format server object instance.

### Interactive format server object to controller object instance

Controller object instance directives
- S<@:*sec*:*milli*:*data*>: After *sec* seconds and *milli* milliseconds return *data* to this interactive format server instance.
- S<D:*screen*:*IFS*>: Change screen format *screen* to be controlled by interactive format server object instance
- S<*r*:*t*:+:*num*>: Request *num* amount or r resources of type g.
- S<U:*chan*:*screen*[:*data*]>: Change subscriber on virtual channel *chan* onto screen *screen,* sending *data* to the new interactive format server object instance once the user has been connected ?.

Messages sent from the interactive format server objects 425 via the controller object instances 420 have there prefixes stripped before being dispatched by the controller object instances 420. The prefixes are simply to inform the controller object instances 420 of the destinations of the messages.

The operation of the present embodiment will now be described using exemplary display formats and user actions and with reference to Figures 6 to 15. Generally, the actually messages sent will not be recited. However, the reader can refer to the above list of messages for further details.

The first stage in the operation of the present embodiment is the off-line configuration of the control subsystems 305a, 305b, the audio subsystem 304 and the video subsystems 302, 303. Each video subsystem 302, 303 will be required to produce a number of displays. Some, if not all, of these will require still or moving image files and these files must be loaded into the disk drives 363 of the video processors 321, 331. To do this an operator uses the management subsystem 306 transmit the files to the video subsystems 302, 303 from a storage device (not shown) via the control subsystem 305 and the ISDN network 314 during system downtime. The operator uses the management subsystem 306 to transfer audio files for accompanying the pages from a storage device, which may be at the management subsystem 306, to the audio subsystem 304. It is to be noted that the image files are transferred while the system is off-line. Accordingly, video files can be transmitted using a much greater time than their playing time, thereby reducing the bandwidth required for their transmission.

Once the audio and video resources have been distributed, the operator uses the management subsystem 306 to instantiate the main objects of the control and audio subsystems 305a, 305b, 304 and set the order of the display formats for each video subsystem 302, 303. An interactive format server object 425 is instantiated for each video subsystem 302, 303 in respectively the first and second control subsystems 305a, 305b and these in turn instantiate screen definition objects 427 corresponding to the initial display formats for respective video subsystem 302, 303 as specified in the schedule object instances 424 of the control subsystems 305a, 305b.

The interactive format server objects 425 make calls to their respective screen definition object instances 427. Format definition data is returned to the interactive format server object instances 425 and then dispatched to the video subsystems 302, 303 via the controller object instances 420.

When the first video processor 321 receives the format definition data for its initial display format, its processor 361 stores it in the memory 362. The processor 361 then generates commands for the video card 366 on the basis of the format definition data. The video card 366 responds to these commands by generating the image on the display screen 322. In this case, the initial display comprises simply a field of colour with an invitation to call a telephone number, as shown in Figure 6, so it is not necessary to retrieve any background image files from the disk drive 363 or include video from the tuner 325. However, the initial display could include moving or still images if the designer so wished.

The second video subsystem 303 operates in the same way as the first video subsystem 302 to produce its initial display. In the present embodiment, the initial display format of the second video subsystem 303 is the same as that of the first video subsystem save that the telephone number displayed differs (see Figure 7). The telephone numbers differ so that the audio subsystem 304 can determine which display screen 323, 332 a public land mobile network subscriber is seeing.

While the initial displays are being set up at the video subsystems 302, 303, the audio subsystem 304 is instructed to start up by the management subsystem 306. During start up, the audio subsystem 304 initialises the channels and establishes network connections to the control subsystems 305a, 305b.

The system is now online.

A first public land mobile network subscriber takes up the invitation to call the number displayed by the first video subsystem 302 using his mobile station 327. The call is routed through public land mobile network 311 and the Public Switched Telephone Network 307 to the ISDN termination card 349 of the audio subsystem 304. The state of the real channel, for instance channel "0", corresponding to the line, consequently changes from IDLE to RING.

The server object of the audio subsystem 304 is informed of this event and responds to the call by causing an off-hook signal to be generated. This places the channel in the ACTIVE state. When channel enters the ACTIVE state, the server object of the audio subsystem 304 first identifies the called number, using DDI, and identifies the video subsystem 302, 303 from which the call was made and consequently the interactive format server object instance 325 to which messages should be sent. Having identified the first interactive format server instance 325 in the first control subsystem 305a, the server object instance 400 calls the first control subsystem object 402a to send a message to the first control subsystem 305. The first control subsystem object instance 402a maps real channel "0", in which the call arrived, onto a virtual channel, e.g. virtual channel "0". It should be noted that separate channel and group maps are maintained for each interactive format server object instance 425. Finally, a NEW_CONNECT message (<*0*:*+*:*0171 600* ...>) is sent to the first control subsystem 305a by the control subsystem object instance 402 of the audio subsystem 304.

The controller object instance 420 receives the NEW_CONNECT message via the audio subsystem object instance 421 of the control subsystem 305 and passes the NEW_CONNECT message to the interactive format server instance 425a for the first video subsystem 302. The first interactive format server object instance 425a calls the screen definition object instance which responds with a change display format message (S < D:*Initial*:*IFS1>* which is passed to the controller object instance 420. The controller object instance 420 then obtains the next format "Tweeny1" from the schedule object instance and instructs (<D:*Tweeny1*: *+* >) the first interactive format server object instance 425a to destroy the present screen format object instance and instantiate that for "Tweeny1".

Once the Tweeny1 screen format object 427 has been instantiated, it returns the format definition data for "Tweeny1" which is then sent to the first video subsystem 302 via the controller object instance 420 of the first control subsystem 305a after having the "O" prefix stripped. The Tweeny1 screen format object instance 427 also returns an instruction (I<sPlay 0 welcome > ) to the audio subsystem 304 requiring it to play a welcome message file to the calling subscriber. This message is sent, minus the "I" prefix to the audio subsystem 304 by the controller object instance 420 via the audio subsystem object instance 421.

The message is received by the first control process object instance 402a of the audio subsystem 304. The first control process object instance 402 then calls a method of the server object instance 400 which starts the file being played on a digital signal processor of the voice resource card 347 and routes the output of the digital signal processor to real channel "0". During the playing of the welcome file, channel "0" is in the SFP state to ensure that the whole welcome message is heard by the subscriber unless he terminates the call.

The first video subsystem 3 receives the format definition data and sets up the static elements of the display as described above. "Tweeny1" is shown in Figure 8 and has a patterned background 100 defined by an image file, two video windows 101, 102 and an eliptical region 103, labelled "continue". Instructional text is also displayed and instructs the user to press "1" to hear the audio for the lefthand video window 101, "2" to hear the audio for the righthand video window 102, # to continue to the next display and ^{*} to listen to help.

Although two video windows have been defined, the video is not played immediately because of the need to sychronize the videos with their accompanying audio files. Therefore, once the first video subsystem 302 has reported back that the display format has been set up and the audio subsystem 304 has reported the end of the welcome message with a FILE_END message (<0:$>), the first interactive format server object instance 425 calls its display definition object instance 427 using the message contents as parameters. The display definition object instance 427 returns a message for the first video subsystem 302 to start playing a first video file in the lefthand window 101 and a message (mStart 4 file1) to the audio subsystem 304. These messages are sent to the audio subsystem 304 and are received by its first control subsystem object instance 402a. The first control subsystem object instance 402a then calls methods of the server object instance 400 to start playing the accompanying audio (filel) using, for example, real group "1" corresponding to virtual group "4". The first interactive format server object instance 425 sends these messages to their respective destinations substantially simultaneously.

Additionally, the display definition object instance 427 returns a message for the first video subsystem 302 to start playing a second video file in the righthand window 102 and, substantially simultaneously, sends a message to the audio subsystem 304 to start playing the accompanying audio. The audio subsystem 304 allocates, for example, real multiplay group "2" for playing the accompanying audio file for the second video window 102 and maps it onto virtual multiplay group "2" for the first interactive format server object instance 425. The dispatch of a video play message and the audio play message, for the accompanying audio, may be staggered, typically by a few tens of milliseconds, to account for differing response times of the audio and video subsystems.

When the playing of an audio file accompanying a video in a window 101, 102 finishes the audio subsystem sends a MULTI_PLAY_FILE_END message (<4:&$> or <2:&$> as appropriate) to the first interactive format server object instance 425. Similarly, the first interactive format server object instance 425 is informed when the playing of the video file finishes. The first interactive format server object instance 425 calls to its display definition object instance 427 using these notification messages as parameters. The display definition object instance 427 returns the audio and video file play commands again and the first interactive format server object instance 425 sends them to the audio subsystem 304 and the first video subsystem 302. This keeps the audio synchronised with the video.

If the first subscriber now presses the "1" key of his mobile station 327, server object instance 400 of the audio subsystem 304 identifies that "1" has been pressed by the subscriber on real channel "0" and sends a DIGIT_PRESS message (<0:1>) to the first interactive format server object instance 425a. The DIGIT_PRESS message identifies the digit that has been pressed and the virtual channel corresponding to the real channel in which the digit's DTMF signal was received The first interactive format server object instance 425a calls to the display definition object instance 427a using the message as a parameter and is returned messages for the first video subsystem 302 and the audio subsystem 304 indicating that the subscriber wishes to listen to the audio for the lefthand video window. Accordingly, the first interactive format server object instance 425 sends a "mAdd 0 1" message to the audio subsystem 304 to add virtual channel "0" to virtual multiplay group "1" and a create indicium message to the first video subsystem 302. The control subsystem object instance 402 and the server object instance 400 of the audio subsystem 304 respond together to the audio subsystem message by adding real channel "0" to the real multiplay group "4" after accessing the virtual channel and group mapping tables. Consequently, the first subscriber then hears the audio in the loudspeaker of his mobile station 327. The first video subsystem 302 responds to its message by generating an indicum 104, representing the subscriber, adjacent the lefthand video window 101.

If the first subscriber now presses the "2" key of his mobile station 326, the above process is repeated save that the message sent to the audio subsystem 304 is "mAdd 0 2" and the create indicium message has different parameters defining the indicium's position. The audio subsystem 304 responds to its message by removing real channel "0" from real multiplay group "1" and adding it to real multiplay group "2" so that the first subscriber hears the audio accompanying the video in the righthand video window 102. The first video subsystem 302 responds to its message by moving the indicium 104 to a position adjacent the righthand video window 102.

The reader will now be familiar with the processing of messages by the object instances of the audio subsystem 104. In the interests of clarity further detailed description of this will not be given.

If at any time the first subscriber presses the "^{*}" key of his mobile station 326, the audio subsystem 304 identifies that "^{*}" has been pressed by the subscriber on real channel "0" and sends a DIGIT_PRESS message to the first interactive format server object instance 425. The DIGIT_PRESS message identifies the digit that has been pressed and the virtual channel corresponding to the real channel in which the digit's DTMF signal was received. The first interactive format server object instance 425 calls to its display definition object instance 427 using the message as a parameter and is returned a message for the audio subsystem 304. The first interactive format server object instance 425 responds by sending these messages to the audio subsystem 304 to remove the real channel "0" from real multiplay group "1" or "2" (as necessary) and start the help file playing on digital signal processor allocated to real channel "0". The first interactive format server object instance 425 also sends a message to the first video subsystem 302 to remove the indicium 104 from the displayed image. When the help file has finished, the audio subsystem 304 sends a FILE_END message to the first interactive format server object instance 425 and resets the state of real channel "0" to ACTIVE.

If the first subscriber presses the "#" key of his mobile station 326, the audio subsystem 304 identifies that "#" has been pressed by the subscriber on real channel "0" and sends a DIGIT_PRESS message to the first interactive format server object instance 425. The DIGIT_PRESS message identifies the digit that has been pressed and the virtual channel corresponding to the real channel in which the digit's DTMF signal was received. The first interactive format server object instance 425 receives the message and calls to its display definition object instance 427 using the message as a parameter and is returned a message for notifying the first video subsystem 302 that the subscriber is ready to move to the next display format. The first interactive format server object instance 425 then sends the message to the first video subsystem 302 which responds by moving the indicium 104 into the eliptical window region.

After each message from the audio subsystem 304 has been processed by the first interactive format server object instance 425 and its display definition object instance 427, the first interactive format server object instance 425 determines whether all of the subscribers using the first video subsystem 302 are ready to move to the next display format. In the present situation, only one subscriber is using the first video subsystem 302 and the first interactive format server object instance 425 therefore immediately informs the controller object instance 420 of the first control subsystem 305a that the display format must be changed. The controller object instance 420 then retrieves the identity of the next display fromat, in this case "Presentation Domain", from the schedule object instance 424 and instructs the interactive format server object instance 425 to destroy the Tweenyl display definition object instance 427 and instantiate the display definition object for "Presentation Domain".

The interaction of the object instances of the control subsystem 305a, 305b will now be apparent and will be largely omitted from the following in the interests of clarity.

The first control subsystem 305a sends the format definition data for "Presentation Domain" to the first video subsystem 302 which then constructs the new display and audio control commands to the audio subsystem 304. Referring to Figure 8, "Presentation Domain" comprises a background 105 defined by an image file, a video window 106 and instructional information. Initially, the image received by the antenna 324 and the tuner 325 is displayed in the video window 106 and audio from the direct audio feed 309 is fed to, for example, the real group "7" in the audio subsystem 304. The direct audio feed 109 receives audio from another tuner (not shown) tuned to the same channel as the tuner 325 of the first video subsystem 302.

If the first subscriber presses the "1" key on his mobile station 327, he will be connected to the real group "7" and be fed the audio from the direct audio feed 109 and the first video subsystem 302 will display the video from the antenna 324, if it is not already doing so. If the first subscriber presses the "2" key on his mobile station 327, the first video subsystem 302 is instructed to play a video file from the disk drive 363 in the first window and the audio subsystem 304 is instructed to play the accompanying audio file on real group "1" and switch the subscriber's channel from real group "6" to real group "1". Pressing the "^{*}" key causes an audio help file to be played to the subscriber and pressing the "#" notifies the first control process that the first subscriber is ready to move on.

When the subscriber has indicated that he is ready to move on, the first control subsystem 305a sets up the next display format, called "Tweeny2". "Tweeny2" is identical to "Tweeny1" save for the video displayed in the video windows and the accompanying audio files.

If, while "Tweeny2" is being displayed, a second subscriber calls the audio subsystem 304 using his mobile station 328, he will be played a welcome message and may then interact with the display 322. The second subscriber can selectively listen to the audio for the displayed video by pressing the "1" and "2" keys on his mobile station 38. The presence of the second subscriber is indicated by a further distinctive indicium in the display image.

Once a subscriber has indicated his desire to move on by pressing the "#" key on his mobile station 327, 328, his indicium will move to the eliptical region. Until the other subscriber indicates his desire to move on or terminates his call, a subscriber who has pressed the "#" key will still be able to listen selectively to the audio for the displayed video. However, when he presses the "1" or "2" key his indicium will not move from the eliptical region.

When both subscribers have indicated a desire to move on, the first control subsystem 305a sets up the next display format. This display format comprises an interactive game (see Figure 9) in which each subscriber has control of a snake 107, 108 on the display screen 322 and must steer their snake to "eat" objects 109 appearing at random; the more objects a snake eats, the longer it grows. The subscribers can turn their snakes to the left or the right by pressing the "4" and "6" keys on their mobile stations 327, 328 respectively.

If the second subscriber terminates his call at this point, the audio subsystem 304 sends a DISCONNECT message to the first control subsystem 305a. The display definition object instance 427 responds by deleting its record of the second subscriber. In response to the subscriber's disconnection, the audio subsystem 304 frees the real and virtual channels allocated to the second subscriber and removes his channel from any groups of which it had been a member. The first control subsystem 305a also sends a message to the first video subsystem 302 causing it to delete the indicium for the second subscriber.

When the first subscriber indicates his wish to move on, the first control subsystem 305a sets up the next display format, called "Tweeny3". "Tweeny3" is identical to page "Tweeny1" save for the video and audio files played.

When the first subscriber indicates his wish to move on from "Tweeny3", the control subsystem 305a sets up the next display format, called "Conference Domain". The "Conference Domain" format comprises the message "Talk to someone".

At this point, it will be assumed that a third subscriber has accessed the system from near the second video subsystem 303 using his mobile station 437 and has reached a "Conference Domain" display format on the second video subsystem 303 which is controlled by the second control subsystem 305b.

The "Conference Domain" display includes a conference access code, which changes from time to time. In order to take part in a conference a subscriber must enter this code using his mobile station. When a subscriber has entered the conference access code, the relevant control subsystem 305a, 305b instructs the audio subsystem 304 to add the subscriber's channel to a conference group. Subscribers whose channels have been added to the same conference group can talk to other subscriber's, whose channels are members of the same group. If a large number of subscribers are using "Conference Domains", they may be distributed amongst a plurality of conference groups to limit the number of subscribers using any one conference group.

The purpose of the conference access code is to ensure that callers using conferencing are actually near one of the video subsystems 302, 303.

When the first subscriber indicates his wish to move on, the control subsystem sets up the next display format, called "Tweeny4" on the first video subsystem 302. "Tweeny4" is identical to page "Tweeny1" save for the video and audio files played.

Finally, when the first subscriber indicates his wish to move on from "Tweeny4", the first control subsystem 305a sets up the display format "Tweeny1" on the first video subsystem again.

If at anytime all the subscribers using one video subsystem 302, 303 terminate their calls, the control subsystems 305a, 305b, sets up that video subsystem's initial display format.

During the above described example of the operation of the second embodiment, the audio and control subsystems 304, 305a, 305b copy their messages to each other to the management subsystem 306 for logging.

It can be seen from the list of messages that the second embodiment is capable of making outgoing calls from the audio subsystem 304. For example, a display format may provide information about a product and suggest that a subscriber press a digit for further information. If the subscriber presses the digit, the interactive format server object instance and the display definition object instance will send messages to the audio subsystem 304 causing it to place a call to a sales centre via the ISDN termination card 348 and, when the call is connected, connect the subscriber's channel to the sales centre's channel using the MVIP bus.

In an extension to the second embodiment, the audio subsystem 304 is provided with an interface to a mobile telephone and software for generating messages for a mobile telephone network messaging service, for example the SMS service provided by GSM networks. The audio subsystem 304 can then be instructed to transmit text messages to a subscriber's mobile telephone 327, 328, 337, 338 in response to key presses by the subscriber. The text messages may contain, for example, data displayed on a display 322, 332 so that it is available to the subscriber for future reference.

A third embodiment of the present invention will now be described.

Referring to Figure 16, a microcomputer 500 is connected to a large display 501 and the Public Switched Telephone Network 502 using a modem. A subscriber to a public land mobile network is standing in front of the display 502 and can use his mobile station 503 to interact with the display 501. The microcomputer 500 supports a management subsystem, and audio subsystem and a control subsystem substantially as illustrated in Figure 15. However, rather than being linked by a physical network, the I/O interface objects 402, 403, 411, 412, 422, 421 call methods of each other to pass messages.

In the foregoing, the present invention has been described with reference to embodiments in which a plurality of subscribers can interact with one video subsystem simultaneously and in which there is a predefined sequence of display formats. It will be appreciated that the display formats may comprise a web with formats having links to one or more other formats. Such an arrangement of formats is particularly suited a system having only one input audio channel per video subsystem. However, navigation through a web in a multiuser system may be achieved by acceding to the wishes of the majority with a random function to settle voting ties. With a web structure, the management subsystem would not set the order in which formats are used.

The video subsystems have been described as having a single display screen using one format at any given time. However, each video subsystem may comprise a plurality of screens, each using a different format for a different user. A plurality of screens may be used to display parts of a single image according to a single format. Furthermore, one display may be segmented to display images according to more than one format at a time, for instance so that different users can have absolute control over the selection of formats of interest.

The distribution of video files is described as using the ISDN links 33, 43. It will be appreciated that these files may be distributed using data carriers, e.g. disks or tapes.

If a plurality of video subsystems require the same image data, this data may be distributed using a broadcast technique, for instance using a satellite, or digital or analogue terrestrial television channels.

The ISDN links 33, 43 may be replaced by telephone links, either fixed or mobile. A portable video subsystem is envisaged which includes mobile telephone apparatus for communicating with the control subsystem.

The microcomputers used to embody the various subsystems have been described in outline only. The skilled reader, however, will appreciate that these microcomputers may include additional standard elements, including disk drives, monitors, keyboards, etc.

## Claims

1. An interactive display system comprising:
an audio subsystem (4; 304; 500) configured for receiving audio communication signals via a wide area communications network (7, 9; 307, 311; 502) and generating control signals in dependence on the received audio communication signals;
a control subsystem (5; 305a, 305b; 500) configured to respond to said control signals from the audio subsystem (4; 304; 500) by issuing display control signals; and
a video subsystem (2, 3; 302, 303; 500) including display means (21, 22, 31, 32; 321, 322, 331, 332; 501), configured to be responsive to said display control signals to display images on the display means (21, 22, 31, 32; 321, 322, 331, 332; 501),
**characterised in that** said display control signals comprise display command messages and the video subsystem (2, 3; 302, 303; 500) is responsive to said command messages to display images defined by image data provided to the video subsystem (2, 3; 302, 303; 500) independently of said commands.

2. A system according to claim 1, wherein the video subsystem (2, 3; 302, 303; 500) includes local data storage means (213; 263) storing said image data for display in response to said command messages.

3. A system according to claim 1 or 2, wherein the video subsystem (2, 3; 302, 303; 500) includes input means (217, 267) for receiving real-time video signals.

4. A system according to claim 1, 2 or 3, wherein the transmission of the display command messages requires a bandwidth insufficient for the transmission of real-time video.

5. A system according to claim 4, wherein the transmission of the display command messages requires a bandwidth insufficient for the transmission of real-time video having a frame rate greater than twenty frames per second.

6. A system according to any preceding claim, wherein the control subsystem (5; 305a, 305b; 500) is linked to the video subsystem (2, 3; 302, 303; 500) by a communications channel supporting a maximum bit rate of 64kbits s⁻¹, the display command messages being sent via said channel.

7. A system according to any preceding claim, wherein the control subsystem (5; 305a, 305b; 500) is configured to respond to said control signals from the audio subsystem (4; 304; 500) by issuing audio subsystem command messages.

8. A system according to claim 7, wherein the control subsystem (5; 305a, 305b; 500) is configured to respond to a control signal to issue both a display command message for causing a moving image to be displayed by the video subsystem (2, 3; 302, 303; 500) and an audio subsystem command message to cause the audio subsystem (4; 304; 500) to make available via the wide area communications network (7, 9; 307, 311; 502) audio signals for accompanying the moving image.

9. A system according to claim 7 or 8, wherein the audio subsystem (4; 304; 500) includes a telephony interface (44) comprising connecting means for connection of a plurality of telephony circuits, signal processing means (DSP0, ..., DSP7; 340) for producing audio signals from audio signal data and switching means (442; 340, 346, 347, 348, 349) configured to selectively apply audio signals, produced by the signal processing means (DSP0, ..., DSP7; 340) simultaneously to a plurality of telephony circuits by means of said connecting means.

10. A system according to claim 9, wherein the switching means (442; 340, 346, 347, 348, 349) is configured to selectively connect telephony circuits to each other by means of the connecting means.

11. A system according to claim 9 or 10, wherein the switching means (442; 340, 346, 347, 348, 349) includes processing means operating under the control of a program or programs, the program or programs defining a set of switching states of the switching means (442; 340, 346, 347, 348, 349).

12. A system according to any preceding claim, wherein the wide area communications network (7, 9; 307, 311; 502) comprises a public telephone network.

13. A system according to any preceding claim, wherein the wide area communications network (7, 9; 307, 311; 502) comprises a mobile telephone network (9; 311; 502).

14. A system according to any preceding claim, wherein said audio communication signals and/or said audio signals are conveyed in a telephony channel.

15. A system according to any preceding claim, including a plurality of video subsystems (2, 3; 302, 303; 500).

16. A system according to any preceding claim, wherein the control subsystem (5; 305a, 305b; 500) is configured to respond to control signals, generated in response to audio communication signals from different sources by the audio subsystem (4; 304; 500), by issuing display control messages for the same video subsystem (2, 3; 302, 303; 500).

17. An interactive display method comprising:
receiving, at an audio subsystem (4; 304; 500), an audio communication signal via a wide area communications network (7, 9; 307, 311; 502) and generating, by means of said audio subsystem (4; 304; 500), a control signal in dependence on the received audio communication signal;
responding, by means of a control subsystem (5; 305a, 305b; 500), to said control signal (4; 304; 500) by issuing display control signal; and
responding, by means of a video subsystem (2, 3; 302, 303; 500), to said display control signal by displaying an image by means of a display means (21, 22, 31, 32; 321, 322, 331, 332; 501),
**characterised in that** said display control signal comprises a display command message and said image is defined by image data provided to said video subsystem (2, 3; 302, 303; 500) independently of said command message.

18. A method according to claim 17, wherein said image data is stored in a data storage device (213; 263) of the video subsystem (2, 3; 302, 303; 500).

19. A method according to claim 17, wherein said image data is received as real-time video signal at the video subsystem (2, 3; 302, 303; 500).

20. A method according to claim 17, 18 or 19, wherein the transmission of the display command message requires a bandwidth insufficient for the transmission of real-time video.

21. A method according to claim 20, wherein the transmission of the display command message requires a bandwidth insufficient for the transmission of real-time video having a frame rate greater than twenty frames per second.

22. A method according to any one of claims 17 to 21, wherein the display command message is sent to the video subsystem (2, 3; 302, 303; 500) by a communications channel having a maximum bit rate of 64kbits s⁻¹.

23. A method according to any one of claims 17 to 22, including the step of responding to a control signal, produced by the audio subsystem (4; 304; 500), by issuing an audio subsystem command message.

24. A method according to claim 23, wherein both said display command message and said audio subsystem command message are issued substantially simultaneously for causing a moving image to be displayed by the video subsystem (2, 3; 302, 303; 500) and the audio subsystem (4; 304; 500) to make available via the wide area communications network (7, 9; 307, 311; 502) an audio signal for accompanying the moving image.

25. A method according to any one of claims 17 to 24, wherein the wide area communications network (7, 9; 307, 311; 502) comprises a public telephone network.

26. A method according to any one of claims 17 to 25, wherein the wide area communications network (7, 9; 307, 311; 502) comprises a mobile telephone network (9; 311; 502).

27. A method according to any one of claims 17 to 26, wherein said audio communication signal and/or said audio signal are conveyed in a telephony channel.

28. An method according to any one of claims 17 to 27, including:
receiving, at the audio subsystem (4; 304; 500), a further audio communication signal via a wide area communications network (7, 9; 307, 311; 502) and generating, by means of said audio subsystem (4; 304; 500), a further control signal in dependence on the received audio communication signal;
responding, by means of the control subsystem (5; 305a, 305b; 500), to said further control signal (4; 304; 500) by issuing a further display command message; and
responding, by means of said video subsystem (2, 3; 302, 303; 500), to said further display command message by displaying an image by means of said display means (21, 22, 31, 32; 321, 322, 331, 332; 501),
wherein said audio communication signals come from different sources.
